(19) Europäisches Patentamt / European Patent Office / Office européen des brevets

(11) **EP 3 605 030 A1**

(12) **EUROPEAN PATENT APPLICATION**

(43) Date of publication:
**05.02.2020 Bulletin 2020/06**

(51) Int Cl.:
***G01F 23/26*** *(2006.01)*

(21) Application number: **18306056.5**

(22) Date of filing: **02.08.2018**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(71) Applicant: **SUEZ Groupe**
**92040 Paris la Défense Cedex (FR)**

(72) Inventor: **DE SCHREVEL, Raymond**
**6171 GZ STEIN (NL)**

(74) Representative: **Bell, Mark**
**Marks & Clerk France**
**Immeuble «Visium»**
**22, avenue Aristide Briand**
**94117 Arcueil Cedex (FR)**

(54) **GREASE TRAP MONITORING SYSTEM AND METHOD OF OPERATION**

(57)    An approach to determining and monitoring the depth of grease in a grease trap is provided, based on a capacitative detector, whereby the respective capacitance across multiple electrodes distributed along the detector are determined, and on the basis of the measured capacitance values and the distribution of the electrodes, the position of a transition from water to grease, grease to air, or otherwise the depth of accumulated grease in the trap. Information may be transmitted by the detector for remote processing, which may in turn be used to schedule maintenance, issue alerts, and the like.

FIG. 3

FIG. 4

## Description

## Field of the invention

The present invention relates to the monitoring of grease traps, and in particular the determination of the levels of grease and water in such grease traps.

## Background of the invention

In various industries, and in particular relating to food processing, greases are a common waste product. These greases are often expelled with waste water into the sewer system, where they tend to congeal and accumulate, leading to possible blockages and other infrastructure management problems. To minimise problems of this kind, operators in certain fields are required to install grease traps in their waste water channels.

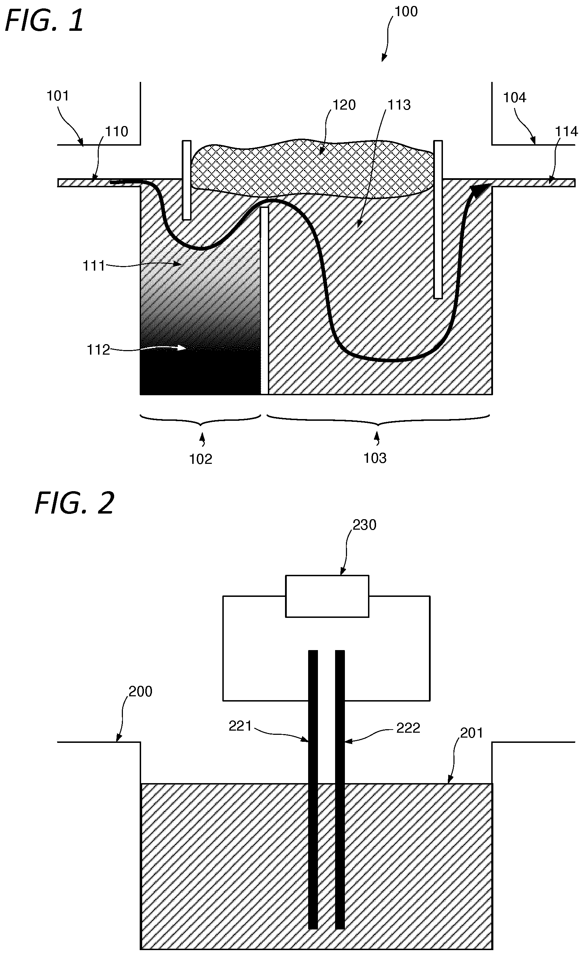

Figure 1 shows a grease trap as known in the prior art.

As shown in figure 1, a grease trap 100 may comprise an inlet 101, a sludge trap 102, a separation tank 103 and an outlet 104. In use, contaminated water 110 arrives via the inlet 101 and enters the sludge trap. In the sludge trap particulate matter 112 that is heavier than water 111 is allowed to precipitate to the bottom of the trap. The water 113 next flows to the separation tank. Grease droplets dispersed in the water rise to the surface, and merge. As it cools, the grease 120 tends to solidify at the surface of the water. The remaining water 114, cleaned of sludge and grease, is now allowed to flow from the outlet 104 into the sewer system.

It will be appreciated that the trap will need to be periodically cleared to ensure that the accumulated grease does not interfere with the proper operation of the trap.

Conventional responses to this issue include establishing a maintenance schedule based on an estimated of the rate of accumulation. This approach is undermined by the fact that grease production is not constant throughout the year, for example due to the fact that more greasy food may be consumed in winter, or that tourist regions show more catering activity in the summer, and so on. Alternatively, grease traps must simply be inspected on a regular basis to determine the level of accumulation as assess the need for cleaning. This is complicated by the fact that grease traps are typically underground, and difficult to access.

As such, a mechanism for remote monitoring of grease traps is required.

## Summary of the invention

In accordance with the present invention in a first aspect there is provided a grease level sensor system for a grease trap containing water, grease and air phases, the grease level sensor system comprising a probe bearing a plurality of pairs of electrodes, the pairs being disposed linearly with respect to the probe according to a specified spatial distribution, the system further comprising a driver coupled to the electrodes to obtain a representation of the capacitance between the respective electrodes in each pair, for communication to a processor configured to receive the representation of the capacitance between the respective electrodes in each pair, and to determine a position of the transition with respect to the representation of the capacitance between the respective electrodes in each pair and the specified spatial distribution.

This approach provides an accurate, robust and inexpensive mechanism that can determine the grease level of the discharging water, without direct contact between sensor and grease. The capacitive measurements are done by measuring the capacitive resistance of a medium between contacts.

In accordance with a development of the first aspect the system of further comprises the processor.

In accordance with a development of the first aspect the processor is adapted to determine a position of a second transition between a further two phases with respect to the specified spatial distribution.

By determining the position of both the grease/water transition and the grease air transition, the thickness of accumulated grease may be directly determined.

In accordance with a development of the first aspect the driver is further coupled to a temperature sensor.

Incorporating a temperature sensor takes advantage of the installation of the device, to obtain enriched data. This data may help ensure prevent pollution and identify operating defects in the customer's waste water system, which may have implications for grease accumulation. Temperature data may also support a more detailed model with respect to the measurement of grease/water and water air transitions, thereby improving precision.

In accordance with a development of the first aspect the processor is coupled to the driver via a wireless network.

Wireless communication means that readings from remote and inaccessible devices may be more easily recovered, and that data from multiple devices may easily be compiled and processed with more powerful centralised processing capacities.

In accordance with a development of the first aspect the representation of the capacitance between the respective electrodes in each pair is an indication of capacitative impedance, and the driver is adapted to provide a time variant voltage signal of known frequency across each pair of electrodes.

In accordance with a development of the first aspect the processor is adapted to determine the position of the transition with reference to the relative values of respective representations received from two or more pairs of electrodes.

Using multiple distributed electrodes makes it possible to detect multiple transitions, between materials whose electrical properties are not necessarily fully determined.

In accordance with a development of the first aspect the wherein the processor is adapted to determine the position of the transition by comparing each representation of a capacitance with a threshold value.

In accordance with the present invention in a second aspect there is provided a method of determining the level of grease in a grease trap containing water, grease and air phases, the method comprising the steps of

driving a plurality of pairs electrodes disposed in the grease trap along a non-horizontal axis according to a specified spatial distribution to obtain a representation of the capacitance between the respective electrodes in each pair,

and determining a position of a transition between the water phase and the grease phase, or between the air phase and air phase with respect to the representation of the capacitance between the respective electrodes in each pair and the specified spatial distribution.

In accordance with a development of the second aspect the transition is determined with reference to the relative values of respective representations received from two or more pairs of electrodes.

In accordance with a development of the second aspect the transition is determined by comparing each representation of a capacitance with a threshold value.

In accordance with a development of the second aspect the method comprises the further step of determining a position of a second transition between a further two phases with respect to the specified spatial distribution.

In accordance with the present invention in a third aspect there is provided a computer program comprising instructions adapted to implement the steps of the second aspect.

## Brief Description of the Drawings

The above and other advantages of the present invention will now be described with reference to the accompanying drawings, in which:

Figure 1 shows a grease trap as known in the prior art;
Figure 2 shows a capacitance based fluid measurement system;
Figure 3 shows a grease level sensor system for a grease trap in accordance with an embodiment;
Figure 4 demonstrates a hypothetical capacitance distribution as measured by an embodiment;

Figure 5 presents a method of determining the level of grease in a grease trap containing water, grease and air phases;
Figure 6 presents a method of determining the level of grease in a grease trap containing water, grease and air phases;
Figure 7 presents a method of determining the level of grease in a grease trap containing water, grease and air phases;
Figure 8a shows a first alternative distribution of electrodes;
Figure 8b shows a second alternative distribution of electrodes;
Figure 8c shows a third alternative distribution of electrodes;
Figure 8d shows a fourth alternative distribution of electrodes; and
Figure 8e shows a fifth alternative distribution of electrodes.

## Detailed description

It is known to use a capacitance measurement to determine the level of a fluid.

Figure 2 shows a capacitance based fluid measurement system.

As shown, a container 200 contains a fluid 201. Two plates 221 and 222 are arranged in proximity to each other, and disposed so that part of each plate is immersed in the fluid 201. As such, these two plates constitute a capacitor. The capacitance of the two plates is given by equation 1 below:

$$C = \kappa\varepsilon_0 \frac{A}{d} \qquad Eq.\ 1$$

Where $\kappa$ is the relative permittivity of the medium between the plates,
$\varepsilon_0$ is the permittivity of free space, equal to approximately $8.85\times10^{-12}$ F·m$^{-1}$
d is the distance between the plates
A is the area of one of the plates, and
C is the capacitance of the arrangement.

Assuming the fluid in figure 2 is water, and knowing that the relative permittivity of air is around 1, and the relative permittivity of water is around 80, the overall relative permittivity of the arrangement of figure 2 will vary between 1 (with an empty tank) and 80 (with a full tank), leading to significant variations in the capacitance of the system depending on the fluid level. A driver 230 is configured to electrically stimulate the plates 221, 222 so as to measure their capacitance, and thereby obtain an indication of the fluid depth.

The capacitance between electrodes may be determined in a variety of manners, certain examples of which are now described.

One approach is based on the fact that the time a capacitor takes to charge to a particular voltage with a known current is determined by its capacitance, as reflected in equation 2 below:

$$C = \frac{(I\Delta t)}{\Delta V} \qquad Eq.\ 2$$

Where $\Delta V$ is the measured change in voltage,
$\Delta t$ is the measurement duration,
I is the known current, and
C is the value of the capacitance to be determined.

On this basis, by applying a fixed current to the electrode and measuring the voltage across it, the capacitance can be determined by measuring how long the current flows before a specified voltage is reached across the electrodes. A similar approach based on the same characteristic is to observe the voltage reached in a predetermined time in the presence of a known current. An alternative may be based on the resonant properties of a capacitor. For example, where a capacitor is placed in parallel with an inductor, the resonance frequency is given by equation 3 below.

$$f_0 = \frac{1}{2\pi\sqrt{LC}} \qquad Eq.\ 3$$

Where $f_0$ is the resonant frequency,
L is the known inductance, and
C is the value of the capacitance to be determined.

On this basis, in the presence of an inductor having a known value, if the resonant frequency is identified, the capacitance can be determined.
A third alternative may be based on the relationship between the impedance of a capacitor and the frequency of the signal across it, as given in equation 4 below

$$Z_c = \frac{1}{2\pi f C} \qquad Eq.\ 4$$

Where $Z_c$ is the measured impedance of the circuit,
f is the drive frequency applied to the circuit, and
C is the value of the capacitance to be determined.

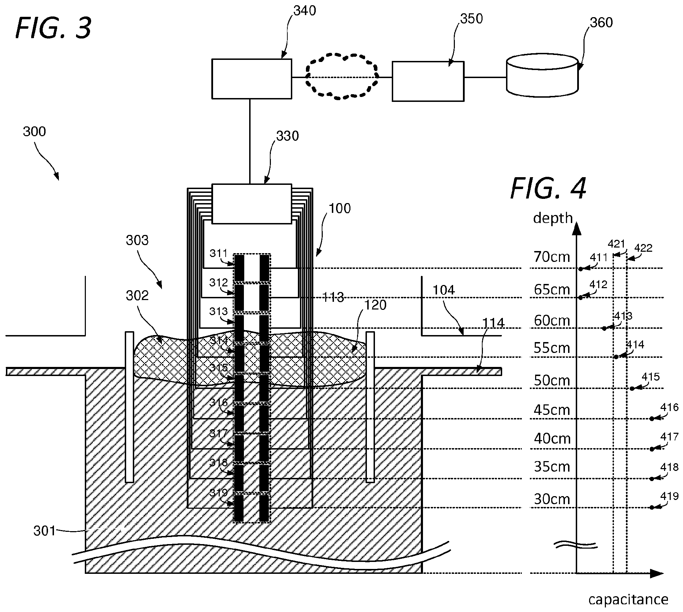

On this basis, by measuring the impedance of the circuit with a known driving frequency, the capacitance may be determined.
In the context of figure 2, it will be appreciated that it may not be necessary to determine the actual capacitance across the electrodes, but merely to determine empirically what measured values correspond to what fluid depths. Figure 3 shows a grease level sensor system for a grease trap in accordance with an embodiment.
As shown, a grease trap 300 contains water 301, grease 302 and air 303 phases. The grease level sensor system comprises a probe 310 bearing a plurality of pairs of electrodes 311, 312, 313, 314, 315, 316, 317, 318, 319. It may be noted that while capacitive sensors as described with respect to figure may be known as a means to detect fluid levels, grease in a grease trap is not necessarily a fluid. The adoption of capacitative measuring techniques for a solid material is unconventional. As shown the pairs of electrodes are disposed linearly with respect to the probe according to a specified spatial distribution. Specifically, as shown the electrodes are disposed with each electrode in a pair situated at the same height on the probe 310, and the respective pairs being spaced equally down the length of the probe from top to bottom. The electrodes of each pair, and each pair of electrodes from one to the next are shown as being the same size. It will be appreciated that in other embodiments other configurations may be envisaged, of which a number of additional examples are presented below. The system further comprises a driver 330 coupled to the electrodes 311, 312, 313, 314, 315, 316, 317, 318, 319 to obtain a representation of the capacitance between the respective electrodes in each pair. The driver may operate according to any of the mechanisms for determining capacitance described above for example with reference to equations 2, 3 or 4, e.g. by providing a known charging current, voltage, or time variant voltage signal with a known frequency depending on the adopted approach, or by any other convenient mechanism as may occur to the skilled person. The result need not be a measurement of capacitance as such, but need merely constitute a precursor such as a time to charge to a particular voltage, voltage reached after a specified charging time, current measured through the capacitor at a particular frequency, and so on. The driver 330 may obtain this value for each pair of electrodes, and optionally digitize the resulting value. For example, the representation of the capacitance between the respective electrodes in each pair may be an indication of capacitative impedance, wherein the driver is adapted to provide a time variant voltage signal of known frequency across each pair of electrodes. The driver may then communicate the representation of the capacitance between each pair to a processor 340 configured to receive the representation of the capacitance between the respective electrodes in each pair, and to identify a pair of electrodes having a capacitance representative of the presence of grease, and determining a position of the transition with respect to the specified spatial distribution.
An advantage of this approach based on multiple electrodes with regard to that of figure 2 is that obtaining an accurate level measurement using the approach of level two presumes stable electrical characterisations of the materials, which cannot be presumed in the case of the contents of a grease trap. Furthermore, while the approach of figure 2 is limited to detecting a single transition between two fluids, the multiple electrode approach of figure 3 can detect any number of transitions, if sufficient electrodes are provided. Similarly, there is provided a probe bearing a plurality of pairs of electrodes, said pairs being disposed linearly with respect to said probe according to a specified spatial distribution, said probe further comprising a driver coupled to said electrodes to obtain a representation of the capacitance between the respective electrodes in each said pair.

The processor may be integrated with the probe, or in proximity to and in direct communication with the probe. Alternatively, the probe may comprise a communication interface 340 able to transmit the representations of capacitance to the processor via a wired or wireless network. Any suitable communication channel may be used, for example GSM data channels, SMS, Wi-Fi, Bluetooth, LPWAN, Lorawan, Zigbee, Ethernet, Sigfox and so on.

Figure 4 demonstrates a hypothetical capacitance distribution as measured by an embodiment.

Figure 4 presents a hypothetical plot of capacitance on the x axis versus depth on the y axis, in correspondence to the situation presented in figure 3.

On this basis there are provided nine data points 411, 412, 413, 414, 415, 416, 417, 418, 419 on the axis, corresponding to the capacitance as may be measured at each of the pairs of electrodes 311, 312, 313, 314, 315, 316, 317, 318, 319 respectively. As such, since as shown in figure 3, pairs 316, 317, 318 and 319 are immersed in water, they have a higher capacitance. Pair 315 is partially immersed in grease and partially in water, and has a somewhat lower capacitance. Pair 314 is immersed in grease and has a lower still capacitance. Pair 313 is partially immersed in grease and partially in air, and has a still lower capacitance. The remaining pairs 313, 312 and 312 are in the air, and have the lowest capacitance.

The processor 350 as discussed above may receive these representations of the capacitance between the respective electrodes in each pair, and analyse them to identify a pair of electrodes having a capacitance representative of the presence of grease, and determine a position of the transition with respect to the specified spatial distribution. This analysis may be based on one or more capacitance thresholds. For example, as shown in figure 4 a threshold 421 is defined, where any capacitance falling below this threshold is considered to indicate the presence of air, and a second threshold 422 is defined, where any capacitance falling above this threshold is considered to indicate the presence of water, and any capacitance falling between the two thresholds is considered to indicate the presence of grease. On this basis, a transition from water to grease may be determined to fall in the present case between electrode pairs 314 and 315. Similarly, a transition from grease to air may be determined to fall in the present case between electrode pairs 313 and 314. With knowledge of the spatial distribution of the electrodes, this determination can be converted to an indication of the position of the transition in the grease trap. For example, as shown in figure, the electrodes are known to be situated as follows:

| 411 | 70cm from bottom |
|-----|------------------|
| 412 | 65cm from bottom |
| 413 | 60cm from bottom |
| 414 | 55cm from bottom |
| 415 | 50cm from bottom |

| 416 | 45cm from bottom |
|-----|------------------|
| 417 | 40cm from bottom |
| 418 | 35cm from bottom |
| 419 | 30cm from bottom |

Knowledge of the spatial distribution of the electrodes may be obtained from a memory, database or other repository 360, which as shown may be associated with the processor 350. Additionally or alternatively, in a case where the probe is remote from the processor, the probe may also comprise a memory, database or other repository storing details of the spatial distribution, which it may communicate to the processor as required, for example with each data transmission, at initialisation, on a regular schedule (e.g. daily, weekly, monthly etc.) or otherwise. Alternatively a regular, predetermined spacing may be adopted for electrodes (e.g. 1 cm spacing) so that measurements can be taken directly to indicate transition position. The probe may additionally comprise spacers or other elements suitable to ensure a particular positioning of the probe in the grease trap, in particular with respect to the bottom thereof, so as to avoid the need for measurements or configuration during installation.

On this basis, the processor may determine that since the transition from water to grease has been determined to fall in the present case between electrode pairs 314 and 315, the water depth is between 50 and 55 cm. Similarly, the processor may determine that since the transition from grease to air has been determined to fall in the present case between electrode pairs 313 and 314, the grease to air transition is between 55 and 60 cm from the base of the trap, and therefore the grease layer is between 0 and 10 cm thick.

It will be appreciated that a single remote processor may handle data from an arbitrary number of probes.

Any of these determinations may be compared to alarm thresholds, and in a case where an alarm threshold is exceeded, e.g. if the water depth or grease thickness is too great, the processor may be provided with further communication means suitable to transmit an alarm signal. This alarm signal may be an audible or visual alarm, and may additionally or alternatively involve the transmission of an electronic message, for example an SMS, email or other convenient electronic message format.

This message may simply be for the purposes of information, or may comprise machine operable instructions. In this case, a message may be directed to an automated control or supervision system able to automatically take remedial steps in the case of an alarm situation, for example by shutting down or slowing certain processes producing grease until maintenance can be performed, or initiating an automated cleaning process of the grease trap. Accordingly, the processor may be adapted to determine a position of a first transition between any two phases with respect to the specified spatial distribution. This transition may be either the water-grease transition, or the grease-air transition.

The processor may further be adapted to determine a position of a second transition between a further two phases with respect to the specified spatial distribution. This transition may be either the water-grease transition, or the grease-air transition, such that both the water-grease transition and the grease-air transition are determined.

The system may optionally comprise additional detectors. Some or all of these additional detectors may furthermore be couple to the driver 330, which may be further adapted to obtain readings from such further detectors. Still further, some or all of any such further detectors may additionally be coupled to the communication interface, via the driver or otherwise, so that readings from some or all of these additional detectors may be communicated externally. Still further, the communications interface may convey readings from some or all of these additional detectors to the processor. The processor may process any readings from such additional detectors together with the representations of capacitance from the electrodes, or independently. Examples of such additional sensors may include one or more temperature sensors, positioned so as to measure respectively one or more of a water temperature, an air temperature or a grease temperature. Further examples of additional sensors may include a pH sensor, flow rate sensor, turbidity sensor, and the like.

While the example of figure 4 presumes the definition of fixed capacitance thresholds, in other embodiments, thresholds may be dynamically determined by the processor, for example on the basis of temperature measurements.

Alternatively, transitions may be determined to exist where a high rate of change between adjacent pairs of electrodes is detected.

In certain embodiments, once a transition has been determined to exist somewhere between two electrodes, the capacitance between those two electrodes may be further processed to estimate more precisely the position of the transition. Once it has been determined that the electrodes are partially in air, and partially in grease (or partially in water and partially in grease), it can be determined with reference to the known permittivity of these materials and the measured capacitance what proportion of the electrodes is in each of these medium.

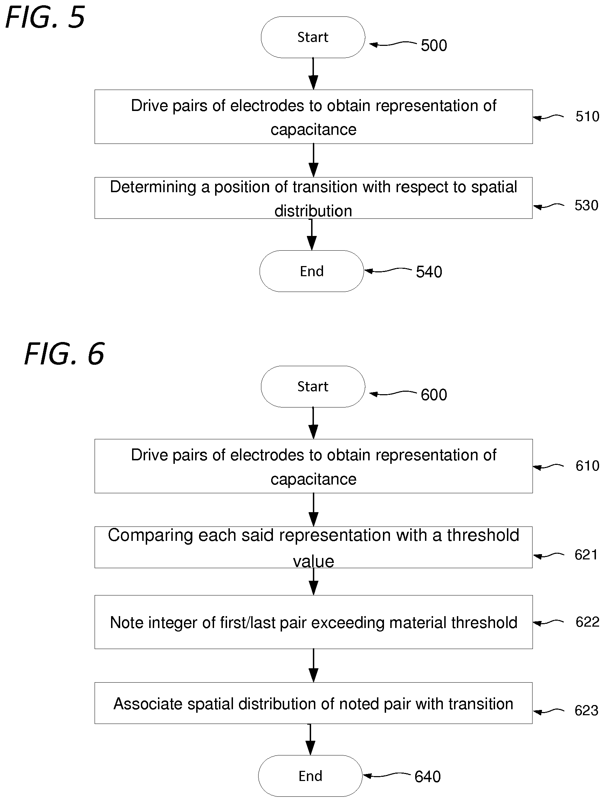

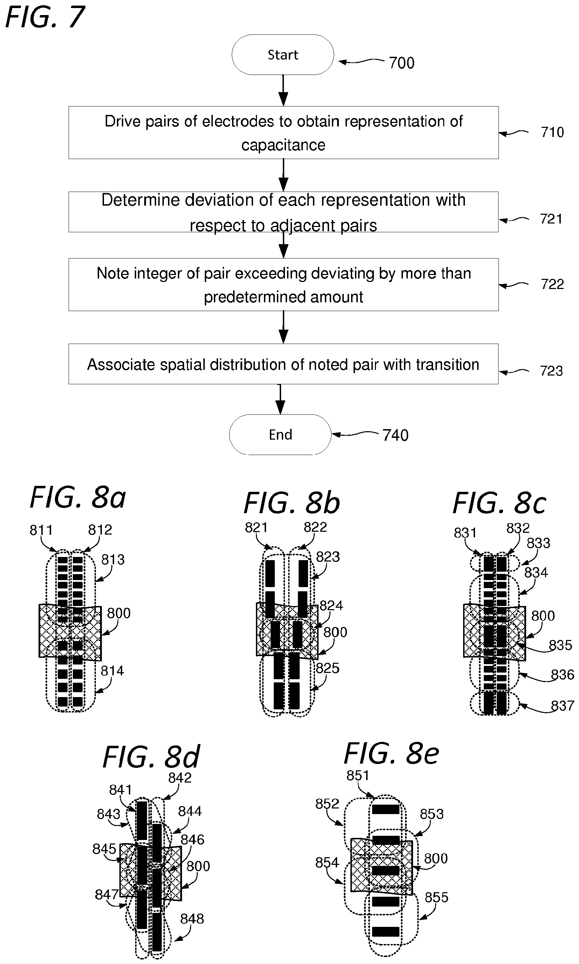

Generally, there is provided a method for determining a grease layer thickness comprising measuring a capacitive between at least two points of a medium in a grease trap, the medium comprising grease, determining a medium change if the capacitive between the at least two points is greater than a threshold and in that case, and determine that the grease layer thickness of the grease trap is the distance between the at least two points. Figure 5 presents a method of determining the level of grease in a grease trap containing water, grease and air phases. As shown, the method starts at step 500 before proceeding to step 510 at which a plurality of pairs of electrodes disposed in the grease trap along a non-horizontal axis according to a specified spatial distribution are driven to obtain a representation of the capacitance between the respective electrodes in each pair. At step 530, a position of a transition between the water phase and the grease phase, or between the grease phase and air phase is determined with respect to the representation of the capacitance between the respective electrodes in each pair and the specified spatial distribution. The method terminates at step 540 Different approaches may be taken with respect to the step of determining a position of a transition between the water phase and the grease phase, or between the grease phase and air phase with respect to the representation of the capacitance between the respective electrodes in each pair and the specified spatial distribution. Figures 6 and 7 illustrate two such approaches. Figure 6 presents a method of determining the level of grease in a grease trap containing water, grease and air phases. As shown, the method starts at step 600 before proceeding to step 610 at which a plurality of pairs of electrodes disposed in the grease trap along a non-horizontal axis according to a specified spatial distribution are driven to obtain a representation of the capacitance between the respective electrodes in each pair. At step 621 each representation is compared with a threshold value. This threshold value may be selected as representing a minimum capacitance associate with the presence of water, corresponding to 421 above, or a minimum capacitance associate with the presence of grease, corresponding to 422 above, or any other suitable threshold. With respect to grease, the threshold may be selected on the basis of the type of grease expected to be present, e.g. whether is expected to be an oil on one hand or a heavy grease on the other. The representations of capacitance received from the driver may be compared to the threshold as they are received, or may be stored before processing. In a case where the driver cyclically drives each pair of electrodes in sequence from top to bottom, or bottom to top, the representations will in any case arrive in a convenient sequence for processing. A given iteration may terminate when all transitions have been detected, without obtaining measurements from any remaining pairs of electrodes. Alternatively, the representations may be stored, and read out in the desired sequence. At step 622, the integer of the first, or as the case may be, the last electrode pair exceeding, or as the case may be, falling below the threshold is noted. For example, if the threshold in question represents the minimum capacitance associated with the presence of water, corresponding to 421, and the electrodes are driven in sequence from top to bottom, the integer of the last pair of electrodes exceeding the threshold may be noted, or the first pair of electrodes failing to exceed the threshold, so that the transition may be noted to occur between the last pair of electrodes exceeding the threshold and the first pair of electrodes failing to exceed the threshold. The method next proceeds to step 623 at which a spatial distribution is associated with the transition, on the basis of the spatial distribution of the noted electrodes, e.g. as discussed above, if the transition has been determined to fall between electrode pairs 313 and 314 as shown in figure 3, in view of the spatial distributions presented in figure 4 the transition may be associated with a spatial distribution of between 55 and 60 cm from the base of the trap. The method terminates at step 640

It will be appreciated that the steps of figure 6 need not be performed in the sequence shown. For example, step 610 may be performed for one pair of electrodes at a time, and steps 621, 622, 623 may then be performed for that pair of electrodes before reverting to step 610 for the next pair of electrodes. On this basis the method may cease once the desired number of transitions have been located. In this case, the step 622 need only be performed for electrode pairs having a representation exceeding the threshold, and step 623 need only be performed for the last/first pair exceeding the threshold. The predetermined amount may be determined with respect to other environmental factors such as temperature. The threshold may also be determined depending on the transition that the processor is seeking to identify, on the basis that the approximate change in capacitance between a grease phase and a water phase will be known in advance, and may be different to that of the approximate change in capacitance between a grease phase and an air phase.

On the basis of information concerning the levels of the transitions of interest in accordance with embodiments described above, maintenance schedules and driving routes may be automatically determined so as to ensure that monitored grease traps remain within operational boundaries, thereby saving energy, and prevent long lasting defects and pollution.

According to certain embodiments a report based on measurements obtained as discussed herein may be automatically compiled for example by the processor, and may automatically be submitted for example by the processor to interested parties such as regulatory authorities. As such, certain embodiments may automatically fullfull requirements for grease trap owners to demonstrate compliance with a cleaning and/or maintenance scheduled by means of a log book or the like.

Embodiments may enable for example an inspector from such a regulatory authority to perform ad hoc checks of the status of any grease trap remotely. Such inspections may be prompted by an automatically generated alarm as discussed above, and may be performed on a real time basis.

Embodiments permit the compilation of data concerning a particular trap or set of traps, for example those belonging to a particular entity. Data may be compiled for example permitting the calculation of an average filing rate e.g. 1 cm of grease growth per month. This rate may then be automatically compared to a short term rolling average, whereby deviations from the reference average rate may trigger an automatic alert, for example by any of the communication methods discussed herein for example with reference to alarm communications. Alternatively or additionally, automatic calendar entries or other task scheduling actions may be instigated by the processor to trigger a manual inspection of the site in question. Such rate information may also be used to predict when a trap is expected to reach capacity, and on this basis automatic calendar entries or other task scheduling actions may be instigated by the processor to schedule maintenance of the site in question at a convenient time before capacity is reached. Similarly, data may be compiled for example permitting the calculation of an average operating temperature range. This range may then be automatically compared to a instantaneous values, whereby deviations from the reference range may trigger an automatic alert, for example by any of the communication methods discussed herein for example with reference to alarm communications. Alternatively or additionally, automatic calendar entries or other task scheduling actions may be instigated by the processor to trigger a manual inspection of the site in question.

With the standard filing rates we can predict when a trap is full and we can plan our visits more optimal.

Figure 7 presents a method of determining the level of grease in a grease trap containing water, grease and air phases. As shown, the method starts at step 700 before proceeding to step 710 at which a plurality of pairs of electrodes disposed in the grease trap along a non-horizontal axis according to a specified spatial distribution are driven to obtain a representation of the capacitance between the respective electrodes in each pair. At step 721 each representation is compared with the representations of adjacent values. The adjacent values may relate to those of electrodes on one side or the other of the pair under consideration, or both sides. A plurality of pairs may be compared to the pair under consideration, in which case a sliding average of adjacent values may be used. When a pair is determined to deviate from adjacent values by more than a predetermined amount, the method proceeds to step 722 at which the integer of the pair deviating from adjacent values by the predetermined is noted, and at step 723 a corresponding transition is associated with the deviating pair. The method terminates at step 740.

It will be appreciated that the steps of figure 7 need not be performed in the sequence shown. For example, step 710 may be performed for one pair of electrodes at a time, and steps 721, 722, 723 may then be performed for that pair of electrodes before reverting to step 710 for the next pair of electrodes. On this basis the method may cease once the desired number of transitions have been located. In this case, the step 722 need only be performed for electrode pairs having a representation deviating by more than the predetermined amount, and step 723 need only be performed for the last/first pair exceeding the threshold. The predetermined amount may be determined with respect to other environmental factors such as temperature. The predetermined amount may also be determined depending on the transition that the processor is seeking to identify, on the basis that the approximate change in capacitance between a grease phase and a water phase will be known in advance, and may be different to that of the approximate change in capacitance between a grease phase and an air phase.

While figure 3 presents a set of identical separate pairs of electrodes, it will be appreciated that many other configurations may be envisaged.

In particular, there may be provided a fluid level detector comprising a plurality of pairs of electrodes, said pairs being disposed linearly with respect to said detector according to a specified spatial distribution, such that a capacitance may be measured between a plurality of pairs of said electrodes in order to determine a fluid transition level. Figures 8a to 8e present a number of examples of possible configurations of electrodes.

Figure 8a shows a first alternative distribution of electrodes. As shown in figure 8a, there are provided two parallel rows of electrodes 811, 812, each comprising an equal number of electrodes, where each electrode in one row is situated opposite a corresponding electrode in the other row. The rows are arranged substantially perpendicular to the surface of the grease 800. On this basis each electrode forms a pair with its opposite electrode, substantially as described with respect to figure 3. The arrangement of figure 8a differs from that of figure 3 in that the vertical spatial relationship of the pairs of electrodes is not constant. As shown, a first group of pairs 813 are situated at a first constant spacing, and a second group of pairs 814 are situated at a second constant spacing, and the two groups 813, 814 are separated by a third spacing. It may be noted that as shown the third spacing between the groups corresponds to the median level of the grease. Accordingly, the spacing between pairs of electrodes may vary. In particular, the spacing between pairs of electrodes may vary along the primary axis along which the pairs of electrodes are distributed in operation, substantially perpendicular to the surface of the grease 800. More particularly, a greater number of electrodes may be clustered near the positions in which transitions between phases are expected to occur, so as to provide more precision in these key regions. Accordingly, the electrodes of the detector or probe may be distributed with a vertical spatial relationship of the pairs of electrodes that varies for certain said pairs. Still further, the electrodes of the detector or probe may be distributed a greater number of electrodes clustered near the positions in which transitions between phases are expected to occur.

Figure 8b shows a second alternative distribution of electrodes. As shown in figure 8b, there are provided two parallel rows of electrodes 821, 822, each comprising an equal number of electrodes, where each electrode in one row is situated opposite a corresponding electrode in the other row. The rows are arranged substantially perpendicular to the surface of the grease 800. On this basis each electrode forms a pair with its opposite electrode, substantially as described with respect to figure 3. The arrangement of figure 8b differs from that of figure 3 in that the horizontal spatial relationship of the pairs of electrodes is not constant. As shown, a first group of pairs 823 are situated at a first constant spacing, and a second group of pairs 824 are situated at a second constant spacing, and a third group of pairs 825 are situated at a second constant spacing. It may be noted that as shown the second group 824 corresponds to the median level of the grease. Accordingly, the spacing between pairs of electrodes may vary. In particular, the spacing between pairs of electrodes may vary along an axis perpendicular to that along which the pairs of electrodes are distributed in operation, that is to say substantially parallel to the surface of the grease 800. More particularly, the spacing may be selected on the basis of the phase (water/grease/air) in which the electrode is expected to be found in operation under nominal conditions. For example, this approach may be used to establish a situation where the capacitance across each electrode is the same in nominal conditions, thereby exaggerating any deviation from this norm. Accordingly, the electrodes of the detector or probe may be distributed with a horizontal spatial relationship of the pairs of electrodes that varies for certain said pairs. Still further, the electrodes of the detector or probe may be distributed horizontally such that the capacitance across each electrode is the same in nominal fluid level conditions.

Figure 8c shows a third alternative distribution of electrodes. As shown in figure 8c, there are provided two parallel rows of electrodes 831, 832, each comprising an equal number of electrodes, where each electrode in one row is situated opposite a corresponding electrode in the other row. The rows are arranged substantially perpendicular to the surface of the grease 800. On this basis each electrode forms a pair with its opposite electrode, substantially as described with respect to figure 3. The arrangement of figure 8c differs from that of figure 3 in that the size of the electrodes in each pair of electrodes is not constant. As shown, a first group of pairs 833 have a first size, and a second group of pairs 834 have a second size, a third group of pairs 835 have a third size, a fourth group of pairs 836 have a fourth size and a fifth group of pairs 837 have a fifth size. It may be noted that as shown the third group 835 corresponds to the median level of the grease, and the adjacent groups 834 and 836 correspond to the likely transition regions. Accordingly, the size of electrodes may vary. In particular, the size of electrodes may vary along an axis perpendicular to that along which the pairs of electrodes are distributed in operation, that is to say substantially parallel to the surface of the grease 800. More particularly, the spacing may be selected on the basis of the phase (water/grease/air) in which the electrode is expected to be found in operation under nominal conditions. For example, this approach may be used to establish a situation where the capacitance across each electrode is the same in nominal conditions, thereby exaggerating any deviation from this norm. The size of electrode may also be selected on the basis of a different intended mode of operation, with smaller electrode being used where a binary approach is intended, with the capacitance across each pair being compared to a threshold to determine in which phase that pair finds itself, and larger electrode being used where an analogue approach is intended with the capacitance being taken to be proportional to the ratio by which it is divided across two adjacent phases. Accordingly, the electrodes of the detector or probe may not be identical for all electrodes. Still further, the size of the electrodes of the detector or probe may be selected with regard to nominal fluid level conditions.

Figure 8d shows a fourth alternative distribution of electrodes. As shown in figure 8d, there are provided two parallel rows of electrodes 841, 842. The rows are arranged substantially perpendicular to the surface of the grease 800. On this basis each electrode forms a pair with its opposite electrode, substantially as described with respect to figure 3. The arrangement of figure 8d differs from that of figure 3 in that one row is offset in its vertical spacing with respect to the other row, so that each electrode in one row is partially opposite two electrodes in the opposite row (to the exception of certain electrodes at the end of rows. On this basis, the number of electrodes in the two rows is not necessarily the same, and one row may have one more electrode than the other. In operation, each electrode may be driven sequentially as part of two separate pairs of electrodes, i.e. first with one of the two opposite electrodes, and then with the other. As shown, six pairs 843, 844, 845, 846, 847 and 848 are defined, with six electrodes disposed in this offset manner. On this basis, a greater number of capacitance readings may be achieved with a given number of electrodes, increasing the resolution of the detection of the position of transitions. Accordingly, the electrodes of the detector may be arranged in parallel vertical rows with one row is offset in its vertical spacing with respect to the other row.

Figure 8e shows a fifth alternative distribution of electrodes. As shown in figure 8e, there is provided a single row of electrodes 851. The row is arranged substantially perpendicular to the surface of the grease 800. On this basis each electrode forms a pair with an adjacent electrode, substantially as described with respect to figure 3. The arrangement of figure 8e differs in particular from that of figure 3 in that is comprises only a single row of electrodes. In operation, each electrode (apart from those at each end of the row) may be driven sequentially as part of two separate pairs of electrodes, i.e. first together with an adjacent electrode on one side (e.g. above or below), and then with an adjacent electrode on the other side. As shown, four pairs 852, 853, 854, 855 are defined, with five electrodes disposed. On this basis, a greater number of capacitance readings may be achieved with a given number of electrodes, increasing the resolution of the detection of the position of transitions. Accordingly, the electrodes of the detector may comprise a single vertical row.

It will be appreciated the various aspects of the configurations described with respect to figures 8a, 8b, 8c, 8d and 8e are subject to countless variations- for example the size of electrodes, horizontal spacing and vertical spacing the number may be varied for each electrode, pair of electrodes or group of pairs as required.

It will be appreciated the various aspects of the configurations described with respect to figures 8a, 8b, 8c, 8d and 8e may be combined in countless permutations. For example, any or all of the size of electrodes, horizontal spacing and vertical spacing may be varied as well as the sequence in which pairs of electrodes are driven.

In the foregoing examples, electrodes have been represented schematically as bars. It will be appreciated that the electrodes may take any form. In particular, electrodes may have any two dimensional form, including rectangles, diamonds, squares, circles, hexagons, any tessellating shape, any part of two interlocking shapes, and so on. Such two dimensional forms may be disposed in a plane including the axis along which the electrodes are distributed spatially, or on a sequence of planes perpendicular to the axis along which the electrodes are distributed, or otherwise. The electrodes may disposed on any dielectric surface, which may be planar or may define a surface of any three dimensional form, including for example the inner or outer surface of a cylinder. The electrodes may also be three dimensional. The electrodes may be disposed coaxially, with one electrode in each pair being situated on an internal extended element, and the other electrode being situated on an external extended element, surrounding the first element and coaxial thereto. The probe may comprise mechanical spacers configured to enforce a particular alignment and spatial distribution of the electrodes with respect to the geometry of the grease trap.

According to an arrangement, a detector for example as described with reference to figures 8a to 8e may further comprise a driver coupled to said electrodes to obtain a representation of the capacitance between the respective electrodes in each said pair, and/or any other component of the probe as described above.

According to an arrangement, a probe may comprise a detector according to any of the arrangements described above.

The probe or detector housing may take any convenient form. According to an arrangement, It may be formed as a tube, with electrodes disposed on an inner or outer surface, or as any three dimensional form. According to an arrangement, Components such as the driver, communications interface or processor may be housed in a water tight compartment of the probe or detector housing, or may be potted in resin, silicone filler or other waterproof material. According to an arrangement, the electrodes may be disposed on a film, which may be glued or otherwise fixed to the inside of a grease trap. This film may be provided with a self-adhesive layer.

According to an arrangement in which the detector comprises a processor as described above, the processor may be adapted to determine a position of a second transition between a further two said phases with respect to said specified spatial distribution.

According to an arrangement in which the detector comprises a driver as described above, the driver may be further coupled to a temperature sensor. According to an arrangement in which the detector comprises a driver and a processor as described above, the representation of the capacitance between the respective electrodes in each said pair may be an indication of capacitative impedance, and the driver may be adapted to provide a time variant voltage signal of known frequency across each said pair of electrodes.

According to an arrangement in which the detector comprises a processor as described above, the processor may be adapted to determine the position of said transition with reference to the relative values of respective representations received from two or more said pairs of electrodes. According to an arrangement in which the detector comprises a processor as described above, the processor may be adapted to determine the position of said transition by comparing each said representation of a capacitance with a threshold value.

Accordingly, there is provided an approach to determining and monitoring the depth of grease in a grease trap, based on a capacitative detector, whereby the respective capacitance across multiple electrodes distributed along the detector are determined, and on the basis of the measured capacitance values and the distribution of the electrodes, the position of a transition from water to grease, grease to air, or otherwise the depth of accumulated grease in the trap. Information may be transmitted by the detector for remote processing, which may in turn be used to schedule maintenance, issue alerts, and the like.

It will be understood that the configurations and/or approaches described herein are exemplary in nature, and that these specific embodiments or examples are not to be considered in a limiting sense, because numerous variations are possible. The specific routines or methods described herein may represent one or more of any number of processing strategies. As such, various acts illustrated and/or described may be performed in the sequence illustrated and/or described, in other sequences, in parallel, or omitted. Likewise, the order of the above-described processes may be changed.

The subject matter of the present disclosure includes all novel and non-obvious combinations and subcombinations of the various processes, systems and configurations, and other features, functions, acts, and/or properties disclosed herein, as well as any and all equivalents thereof.

## Claims

1. A grease level sensor system for a grease trap containing water, grease and air phases, said grease level sensor system comprising a probe bearing a plurality of pairs of electrodes, said pairs being disposed linearly with respect to said probe according to a specified spatial distribution, said system further comprising a driver coupled to said electrodes to obtain a representation of the capacitance between the respective electrodes in each said pair, for communication to a processor configured to receive said representation of the capacitance between the respective electrodes in each said pair, and to determine a position of said transition with respect to said representation of the capacitance between the respective electrodes in each said pair and said specified spatial distribution.

2. The system of claim 1 further comprising said processor.

3. The system of claim 1 or 2 wherein said processor is adapted to determine a position of a second transition between a further two said phases with respect to said specified spatial distribution.

4. The system of any preceding claim wherein said driver is further coupled to a temperature sensor.

5. The system of any preceding claim wherein said processor is coupled to said driver via a wireless network.

6. The system of any preceding claim wherein said representation of the capacitance between the respective electrodes in each said pair is an indication of capacitative impedance, and wherein said driver is adapted to provide a time variant voltage signal of known frequency across each said pair of electrodes.

7. The system of any preceding claim wherein said processor is adapted to determine the position of said transition with reference to the relative values of respective representations received from two or more said pairs of electrodes.

8. The system of any preceding claim wherein said wherein said processor is adapted to determine the position of said transition by comparing each said representation of a capacitance with a threshold value.

9. A method of determining the level of grease in a grease trap containing water, grease and air phases, said method comprising the steps of:

> driving a plurality of pairs electrodes disposed in said grease trap along a non-horizontal axis according to a specified spatial distribution to obtain a representation of the capacitance between the respective electrodes in each said pair,
> and determining a position of a transition between said water phase and said grease phase, or between said air phase and air phase with respect to said representation of the capacitance between the respective electrodes in each said pair and said specified spatial distribution.

10. The method of claim 9 wherein said transition is determined with reference to the relative values of respective representations received from two or more said pairs of electrodes.

11. The method of claim 9 wherein said transition is determined by comparing each said representation of a capacitance with a threshold value.

12. The method of any of claims 9 to 11 comprising the further step of determining a position of a second transition between a further two said phases with respect to said specified spatial distribution.

13. A computer program comprising instructions adapted to implement the steps of any of claims 9 to 12.

## FIG. 1

## FIG. 2

FIG. 3

FIG. 4

FIG. 5

```
          ┌─────────┐
          │  Start  │ ◄──── 500
          └─────────┘
               │
               ▼
┌─────────────────────────────────────────┐
│ Drive pairs of electrodes to obtain      │ ◄── 510
│ representation of capacitance            │
└─────────────────────────────────────────┘
               │
               ▼
┌─────────────────────────────────────────┐
│ Determining a position of transition with│ ◄── 530
│ respect to spatial distribution          │
└─────────────────────────────────────────┘
               │
               ▼
          ┌─────────┐
          │   End   │ ◄──── 540
          └─────────┘
```

FIG. 6

```
          ┌─────────┐
          │  Start  │ ◄──── 600
          └─────────┘
               │
               ▼
┌─────────────────────────────────────────┐
│ Drive pairs of electrodes to obtain      │ ◄── 610
│ representation of capacitance            │
└─────────────────────────────────────────┘
               │
               ▼
┌─────────────────────────────────────────┐
│ Comparing each said representation with  │ ◄── 621
│ a threshold value                        │
└─────────────────────────────────────────┘
               │
               ▼
┌─────────────────────────────────────────┐
│ Note integer of first/last pair          │ ◄── 622
│ exceeding material threshold             │
└─────────────────────────────────────────┘
               │
               ▼
┌─────────────────────────────────────────┐
│ Associate spatial distribution of noted  │ ◄── 623
│ pair with transition                     │
└─────────────────────────────────────────┘
               │
               ▼
          ┌─────────┐
          │   End   │ ◄──── 640
          └─────────┘
```

## FIG. 7

Start — 700

Drive pairs of electrodes to obtain representation of capacitance — 710

Determine deviation of each representation with respect to adjacent pairs — 721

Note integer of pair exceeding deviating by more than predetermined amount — 722

Associate spatial distribution of noted pair with transition — 723

End — 740

## FIG. 8a

811  812
813
800
814

## FIG. 8b

821  822
823
824
800
825

## FIG. 8c

831  832
833
834
800
835
836
837

## FIG. 8d

841  842
843  844
846
845
800
847
848

## FIG. 8e

851
852  853
800
854
855

Europäisches
Patentamt

European
Patent Office

Office européen
des brevets

# EUROPEAN SEARCH REPORT

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| Y | JP 2016 175042 A (TAKENAKA KOMUTEN CO) 6 October 2016 (2016-10-06) * figures 3A-B,4 * | 1-13 | INV. G01F23/26 |
| Y | US 2016/041021 A1 (SAITOU YUUKI [JP] ET AL) 11 February 2016 (2016-02-11) * figures 2, 6 * * paragraph [0017] - paragraph [0077] * | 1-13 | |
| A | DE 11 2016 001250 T5 (DMG MORI CO LTD [JP]) 30 November 2017 (2017-11-30) * figure 3 * | 1-13 | |
| A | WO 03/106936 A2 (ENVIRONMENT ONE CORP [US]; CAPANO DAVID [US]) 24 December 2003 (2003-12-24) * paragraph [0035] - paragraph [0036] * | 1-13 | |

TECHNICAL FIELDS
SEARCHED       (IPC)

G01F
C02F
E03F

The present search report has been drawn up for all claims

| Place of search | Date of completion of the search | Examiner |
|---|---|---|
| The Hague | 25 January 2019 | Rambaud, Patrick |

CATEGORY OF CITED DOCUMENTS

X : particularly relevant if taken alone
Y : particularly relevant if combined with another
    document of the same category
A : technological background
O : non-written disclosure
P : intermediate document

T : theory or principle underlying the invention
E : earlier patent document, but published on, or
    after the filing date
D : document cited in the application
L : document cited for other reasons

................................................................
& : member of the same patent family, corresponding
    document

EPO FORM 1503 03.82 (P04C01)

**ANNEX TO THE EUROPEAN SEARCH REPORT
ON EUROPEAN PATENT APPLICATION NO.**

EP 18 30 6056

This annex lists the patent family members relating to the patent documents cited in the above-mentioned European search report.
The members are as contained in the European Patent Office EDP file on
The European Patent Office is in no way liable for these particulars which are merely given for the purpose of information.

25-01-2019

| Patent document cited in search report | | Publication date | Patent family member(s) | | | Publication date |
|---|---|---|---|---|---|---|
| JP 2016175042 | A | 06-10-2016 | NONE | | | |
| US 2016041021 | A1 | 11-02-2016 | CN | 105074395 | A | 18-11-2015 |
| | | | DE | 112014002902 | T5 | 10-03-2016 |
| | | | JP | 6022413 | B2 | 09-11-2016 |
| | | | JP | 2015004519 | A | 08-01-2015 |
| | | | US | 2016041021 | A1 | 11-02-2016 |
| | | | WO | 2014203832 | A1 | 24-12-2014 |
| DE 112016001250 | T5 | 30-11-2017 | DE | 112016001250 | T5 | 30-11-2017 |
| | | | JP | 5965012 | B1 | 03-08-2016 |
| | | | JP | 2016173301 | A | 29-09-2016 |
| | | | WO | 2016147804 | A1 | 22-09-2016 |
| WO 03106936 | A2 | 24-12-2003 | AU | 2003243537 | A1 | 31-12-2003 |
| | | | US | 6761067 | B1 | 13-07-2004 |
| | | | WO | 03106936 | A2 | 24-12-2003 |

EPO FORM P0459

For more details about this annex : see Official Journal of the European Patent Office, No. 12/82